# EUROPEAN PATENT SPECIFICATION

(11) **EP 1 379 438 B1**
(45) Date of publication and mention of the grant of the patent: **23.02.2011**
(21) Application number: 01991829.1
(22) Date of filing: 12.12.2001
(51) Int. Cl.: B65D 1/04, B65D 81/32

(54) **MULTIPLE CONTAINER**
MEHRFACHBEHÄLTER
RÉCIPIENT MULTIPLE

(30) Priority: 16.03.2001 IT MI20010151 U
(43) Date of publication of application: 14.01.2004
(73) Proprietor: Alverman S.r.l., 24060 Brusaporto (BG) (IT)
(72) Inventor: Arizzi, Fabrizio, 24122 Bergamo (BG) (IT)
(74) Representative: Forattini, Amelia
(86) International application number: PCT/EP2001/014592
(87) International publication number: WO 2002/074636

(56) References cited:
- EP-A- 0 010 965
- US-A- 3 724 987
- US-A- 4 889 255
- US-A- 5 316 159
- US-B1- 6 325 229

## Description

The present invention relates to a multiple container.

Packages constituted by two paired bottles or containers containing detergents or cleaning liquids in general or the like are commercially available.

A typical case is, for example, a bottle provided with a sprayer paired with a second bottle, or refill, to which the sprayer is applied when the first bottle is empty.

Other double packages are constituted by a main bottle and by a secondary bottle which contains a different product to be used in combination with the first product or simply offered as a commercial promotion.

Commercially available double packages are constituted by two separate bottles that are produced during separate production steps by using different molds and are packaged by mechanical assembly or shrink-wrapping. Those operations are complicated and costly, penalizing the entire production cycle. Moreover, the package of the bottle with the secondary container causes space occupation problems during the packaging, shipping and display of the product.

Moreover, containers or bottles are known that are constituted by a main containment body and by a dosage containment body which is connected to the main body by means of a connecting duct. The dosage body is rigidly and permanently associated with the main body and is adapted to allow precise dosage of the contents of the main body. Such type of bottle is disclosed in EP-10965.

WO-01/14220 discloses multiple containers constituting a package, having two or more chambers holding different liquids. The package does not show however how to separate the chambers in order to obtain separate containers.

FR-A-2598393 discloses a container having two separate compartments. The two compartments have to be produced separately.

US-A-3724987 **discloses an apparatus for the blowing of a two-compartment can. The smaller compartment is attached outside the larger compartment.**

The aim of the present invention is to provide a double container which is improved over the cited prior art.

An object of the invention is to provide a double container which can be produced with systems suitable for producing conventional containers in a relatively simple manner and at competitive costs.

An important object of the invention is to provide a double container which is advantageous in terms of space occupation as regards shipping and storage.

This aim and these and other objects which will become better apparent hereinafter are achieved by a multiple container as claimed in the appended claims.

Further characteristics and advantages will become better apparent from the description of the bottle according to the invention, illustrated only by way of non-limitative example in the accompanying drawings, wherein:
Figure 1 is a perspective view of the multiple container according to the invention;
Figure 2 is a top plan view of the container according to the invention;
Figure 3 is a rear elevation view of the container according to the invention;
Figure 4 is a side elevation view of the container according to the invention;
Figure 5 is a side elevation view of the container according to the invention, illustrating the separated containers;
Figures 6 to 8 are views of the steps for separation of the two bodies bey the user;
Figure 9 is a perspective view of the container provided with an additional secondary body;
Figure 10 is a top plan view of the container of Figure 9;
Figure 11 is a rear elevation view of the container of Figure 9;
Figure 12 is a side elevation view of the container of Figure 9;
Figure 13 is a side elevation view of the container of Figure 9, shown with the bodies separated;
Figures 14 to 16 are views of the steps for separation of the two bodies by the user.

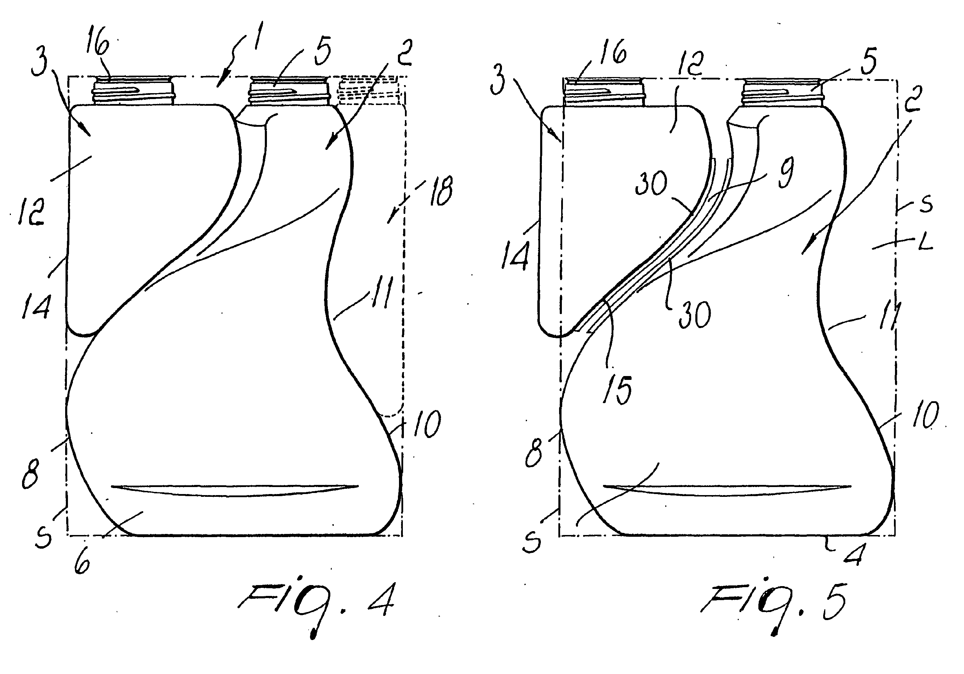

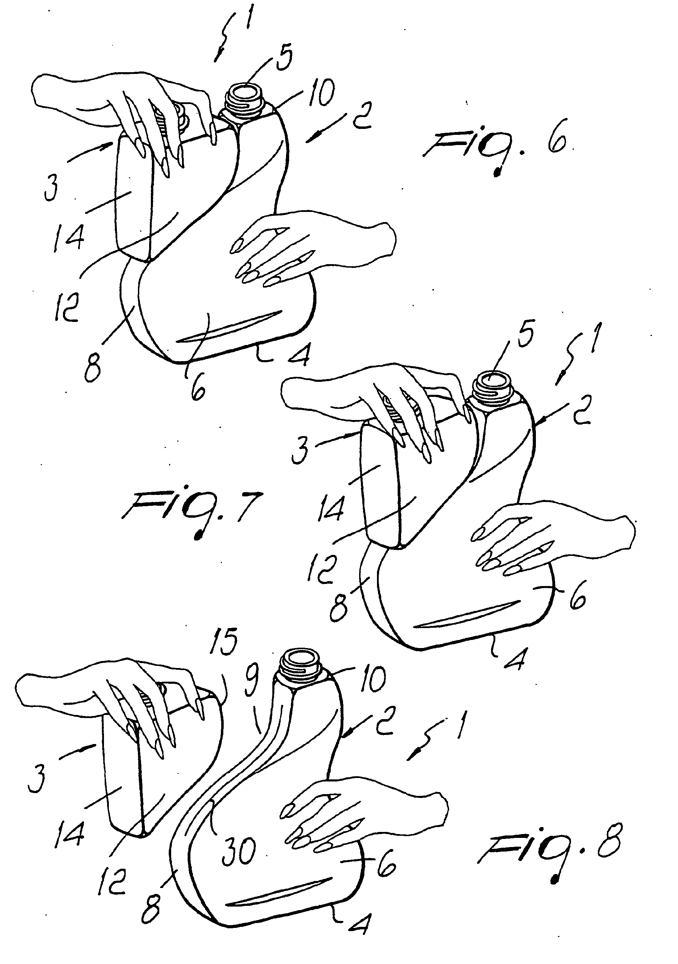

With reference to the accompanying figures, the multiple container according to the invention, generally designated by the reference numeral 1, comprises a main body 2 and at least one auxiliary body 3 that are formed simultaneously, by blow-molding, in a single mold and are separated by a web, shown schematically in Figures 5 and 8 and designated by the reference numeral 30.

The system for obtaining the multiple container according to the invention is substantially similar to conventional blow-molding systems, except that according to the present invention the same mold has at least two cavities that correspond to the two main and auxiliary bodies, into which the injectors introduce air simultaneously or in closely successive steps in order to expand the plastic material against the walls of the previously closed mold.

The operations for filling and capping the bottle can be performed simultaneously or in different steps according to production requirements. For example, if a so-called trigger (sprayer or spray-gun) is present, the auxiliary body is capped in a first step.

The two or more bodies thus formed are mutually joined by a web, or thin portion, whose dimensions are chosen so that it can be easily, broken by the user after buying the container. However, the web is strong enough to withstand the mechanical stresses that affect the container during packaging and shipping and handling in general.

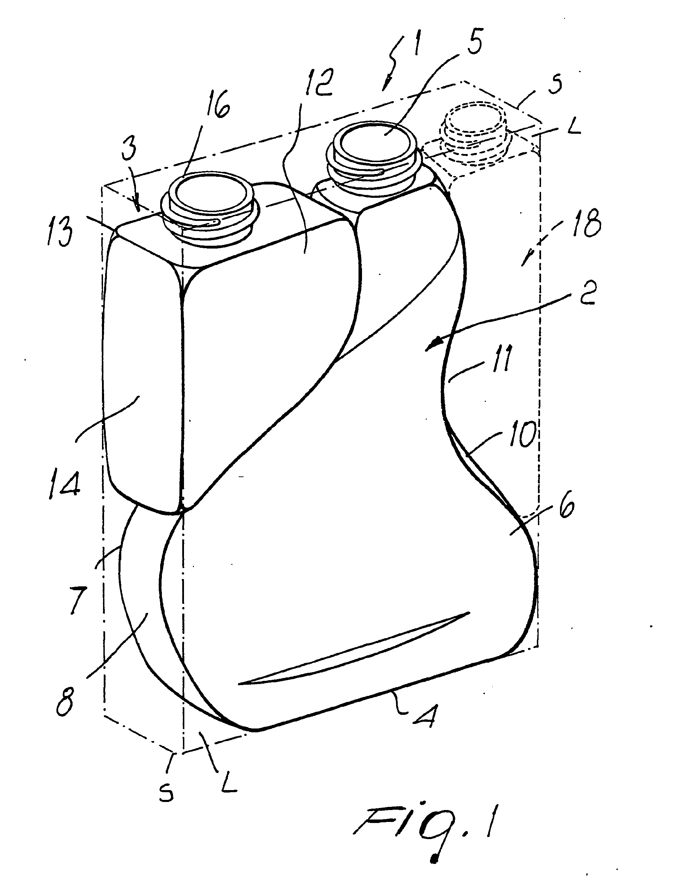

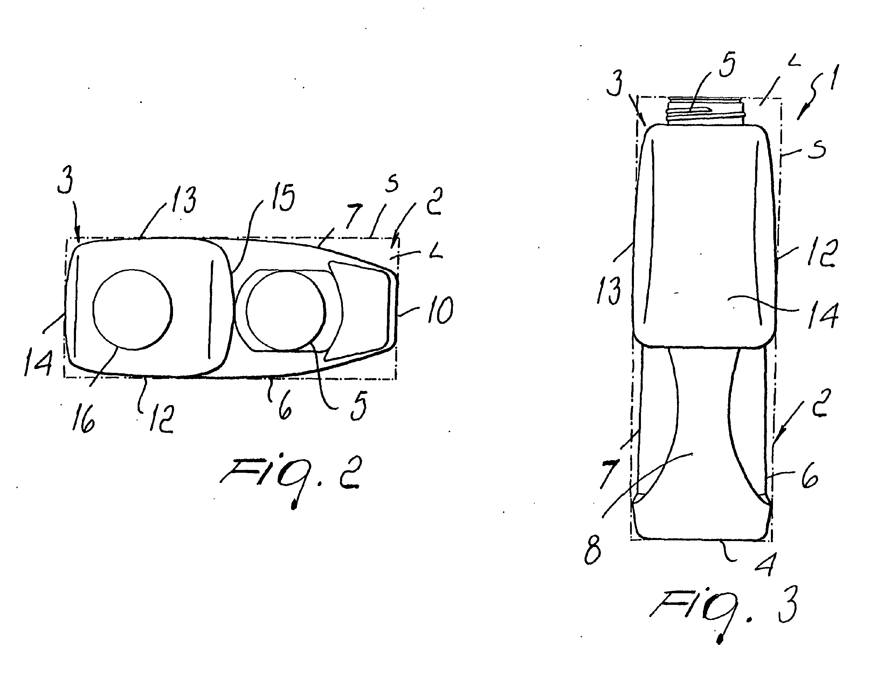

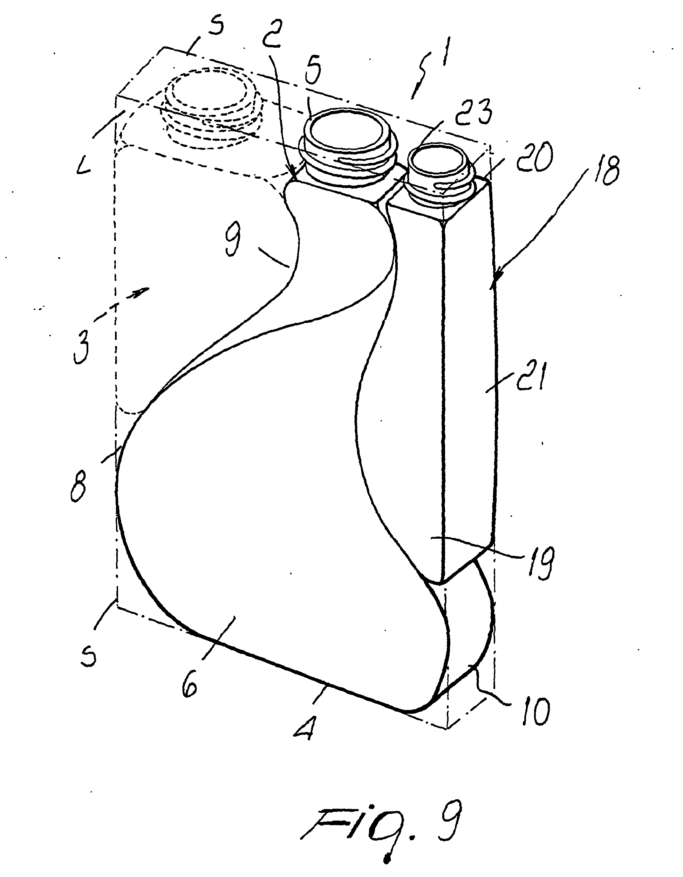

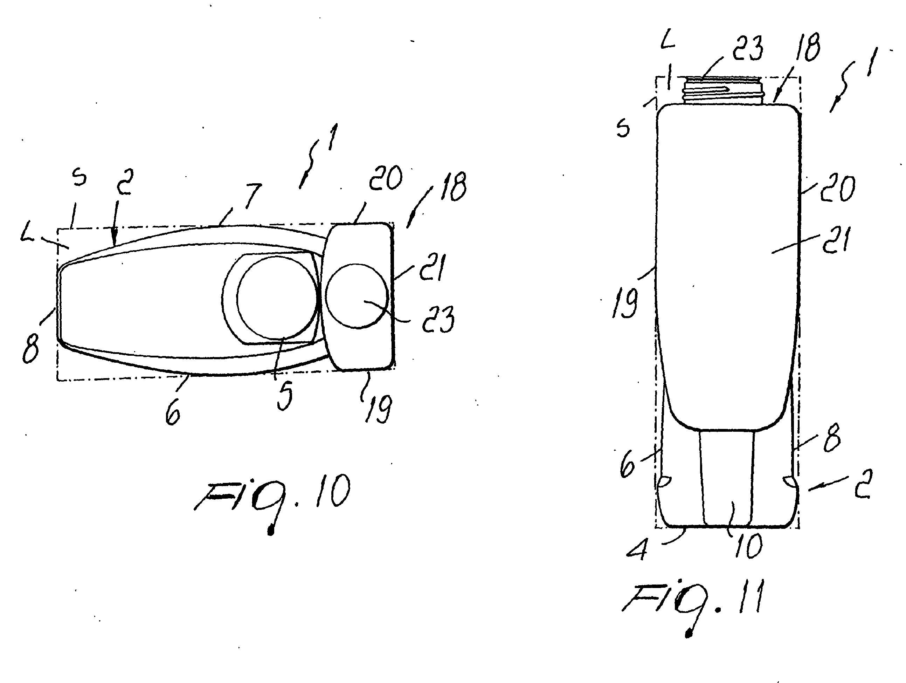

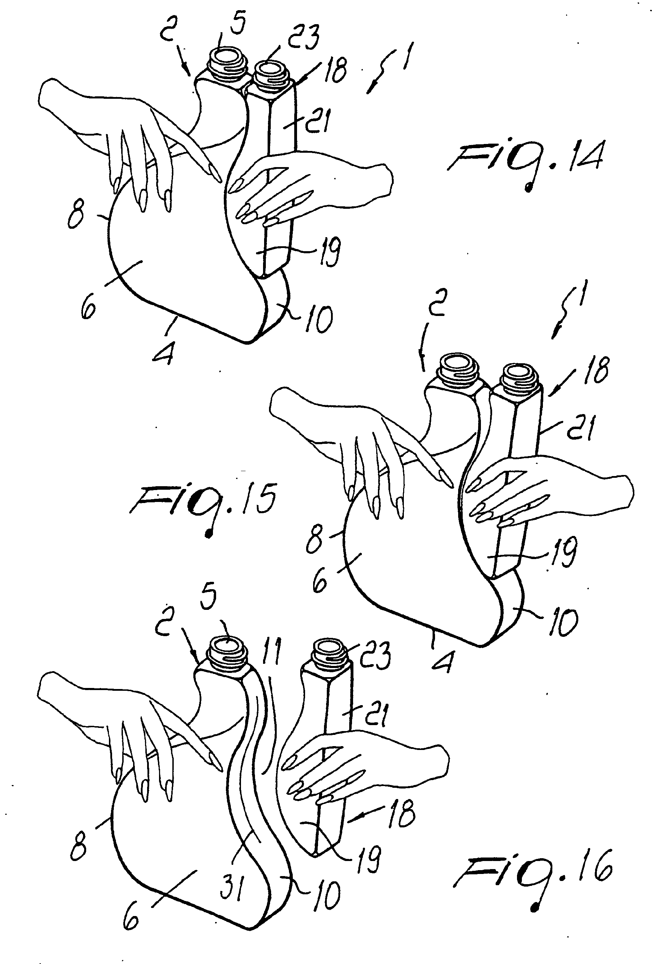

According to a particular aspect of the invention, the main body 2 forms an outline S inside which free portions L remain. The portions are occupied by the auxiliary containment body 3, as shown in particular in Figures 1 to 8, and/or by a possible additional auxiliary containment body 18, shown in particular in Figures 9 to 16.

The figures illustrate a main containment body 2 which comprises, in a lower region, a flat base 4 and, in an upper region, a mouth 5 to which a cap (not shown) of a per se known type can be applied.

The main body 2 has a front face 6 and a rear face 7 that are flat and slightly cambered, a left side which is constituted by a convex portion 8 blended with a concave portion 9, and a right side constituted by a second convex portion 10 blended with a second concave portion 11. The concave portions 9 and 11 form a grip region of the main body 2 having a reduced cross-section which is adapted to facilitate grip by the user.

The auxiliary body 3 has a front face 12 and a rear face 13 that are substantially flat, a left or outer side 14 which is substantially flat, and a right or inner side 15 which substantially matches the shape of the left side of the main body 2. The auxiliary containment body 3 also has, in an upward region, a mouth 16 to which a cap, not shown, can be applied.

The surface of the right or inner side 15 of the auxiliary containment body 3 is associated with the left side, which is constituted by the convex surface 8 and by the concave surface 9, by means of the web 30 which is formed during the molding of the bottle. In Figure 5, the web 30 is shown schematically in the broken condition after separating the auxiliary body 3 from the main body 2.

The auxiliary containment body 3 lies within the outline S defined by the main containment body 2. In detail, the outer side 14 of the auxiliary body 3 does not protrude with respect to the outermost part of the outer side 8 of the main body 2. In an upper region, the mouths 5 and 16 of the respective containment bodies 2 and 3 are arranged at the same height.

It is evident that the multiple container according to the invention is suitable for production in various configurations, shapes and dimensions. In the illustrated case, an additional auxiliary body 18 can be paired with the main body 2, as shown in Figures 9 to 16. The additional auxiliary containment body 18 can be added to the first auxiliary body 3 or can replace it.

The additional auxiliary body 18 has a front face 19 and a rear face 20 that are substantially flat, an outer side 21 which is substantially flat, and an inner side 22 whose shape matches the shape of the right side of the main body constituted by the second convex portion 10 blended with the second concave portion 11.

The additional auxiliary body 18, too, has in an upward region a mouth 23 to which a cap, not shown, can be applied.

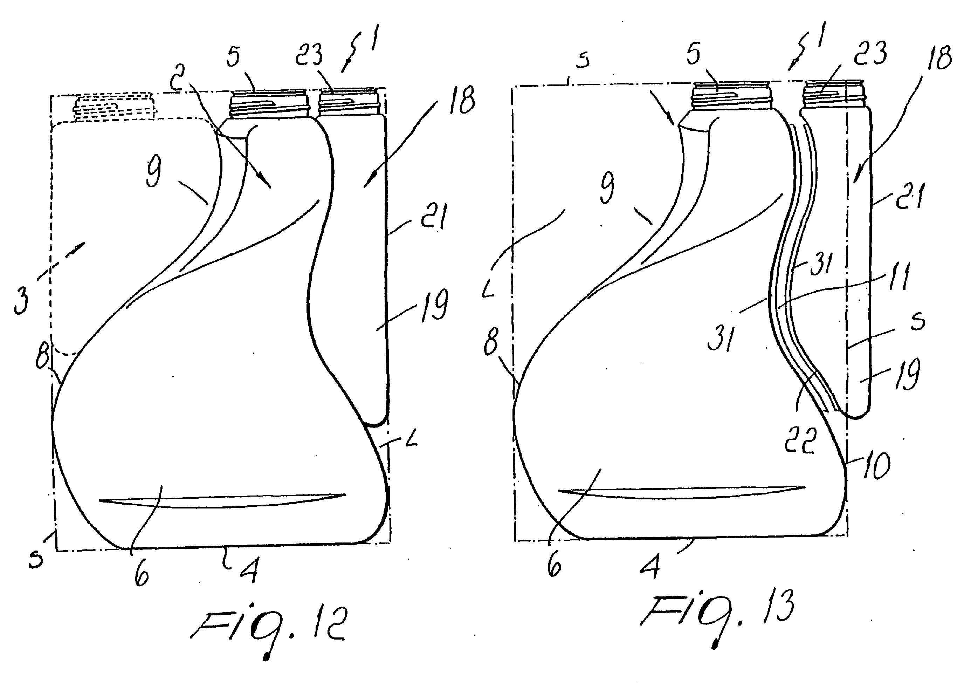

The inner side 22 of the additional auxiliary containment body 18 is associated with the right side, constituted by the second convex surface 10 and the second concave surface 11, by means of a second web 31 provided during the molding of the bottle. In Figure 13, the web 31 is schematically shown in the broken condition after separation of the additional auxiliary body 18 from the main body 2.

The additional auxiliary body 18 also lies within the outline S defined by the main containment body 2. In detail, the outer side 21 of the additional auxiliary body 18 does not protrude with respect to the outermost portion of the outer side 10 of the main body 2. In an upper region, the mouths 5 and 23 of the respective containment bodies 2 and 18 are arranged at the same height.

In practice it has been observed that the invention achieves the intended aim and objects.

The multiple container according to the invention allows to reduce the overall dimensions with respect to conventional paired bottles, allowing to reduce shipping costs and the space required for displaying the product.

The multiple container according to the invention can be used for various purposes, for example for products that can be diluted subsequently by the user or for products where it is necessary to add an unstable component, which cannot be introduced immediately during packaging.

The auxiliary containment body can be filled with the same product as the main body, but in concentrated form to be used as a refill by appropriate dilution, once the main container has been used up.

Another use of the auxiliary container or containers is to contain different products in tester form or for promotional purposes.

The materials and the dimensions may of course vary according to the requirements and the state of the art.

## Claims

1. A multiple container, comprising a main containment body (2) and at least one auxiliary containment body (3, 18) both formed simultaneously by blow-molding in the same mold and separated by an easily breakable web, or thin portion (30); **characterized in that** said main containment body (2) defines an outline (S) and said at least one auxiliary containment body (3, 18) is contained within said outline (S).

2. The multiple container according to claim 1, **characterized in that** it comprises two auxiliary containment bodies (3, 18).

## Patentansprüche

1. Mehrfachbehältnis mit einem Hauptbehältniskörper (2) und wenigstens einem Hilfsbehältniskörper (3, 18) beide gleichzeitig in der gleichen Form durch Blasformen hergestellt und getrennt durch ein zerbrechliches Band oder einen dünnen Bereich (30); **dadurch gekennzeichnet, dass** der Hauptbehältniskörper (2) eine Außenlinie (S) definiert und der wenigstens eine Hilfsbehältniskörper (3, 18) innerhalb der Außenlinie (S) enthalten ist.

2. Mehrfachbehältnis nach Anspruch 1, **dadurch gekennzeichnet, dass** es zwei Hilfsbehältniskörper (3, 18) aufweist.

## Revendications

1. Récipient multiple comprenant un corps de confinement principal (2) et au moins un corps de confinement auxiliaire (3, 18), tous deux formés simultanément par moulage par extrusion soufflage dans le même moule et séparés par une bande ou fine partie facilement cassable (30) ; **caractérisé en ce que** ledit corps de confinement principal (2) définit une silhouette (S) et ledit au moins un corps de confinement auxiliaire (3, 18) est contenu à l'intérieur de ladite silhouette (S).

2. Récipient multiple selon la revendication 1, **caractérisé en ce qu'**il comprend deux corps de confinement auxiliaires (3, 18).
